# FASCICULE DE BREVET EUROPEEN

(11) **EP 2 727 226 B1**
(45) Date de publication et mention de la délivrance du brevet: **01.05.2024**
(21) Numéro de dépôt: 12738540.9
(22) Date de dépôt: 27.06.2012
(51) Int. Cl.: H02K 23/66, H02K 11/25, H02H 7/085

(54) **SYSTEME DE PROTECTION D'ECHAUFFEMENT POUR UNE MACHINE ELECTRIQUE TOURNANTE, NOTAMMENT UN DEMARREUR**
SYSTEM ZUM SCHUTZ GEGEN AUFHEIZUNG FÜR EINE ROTIERENDE ELEKTRISCHE MASCHINE, INSBESONDERE EINEN ANLASSER
SYSTEM FOR PROTECTING AGAINST HEATING FOR A ROTATING ELECTRIC MACHINE, IN PARTICULAR A STARTER

(30) Priorité: 30.06.2011 FR 1155910
(43) Date de publication de la demande: 07.05.2014
(73) Titulaire: Valeo Equipements Electriques Moteur, 94046 Créteil Cedex (FR)
(72) Inventeur: GENTIL, Maximilien, F-69960 Corbas (FR); VEROT, Jacques, F-69002 Lyon (FR); PAYS, Wilfried, F-38510 Sermerieu (FR)
(74) Mandataire: Valeo Powertrain Systems
(86) Numéro de dépôt international: PCT/FR2012/051482
(87) Numéro de publication internationale: WO 2013/001236

(56) Documents cités:
- FR-A1- 2 949 626
- GB-A- 621 035
- US-A1- 2002 096 949

## Description

La présente invention concerne un système de protection d'échauffement, pour une machine électrique tournante, notamment un démarreur.

Des machines électriques tournantes, tels que les démarreurs, comprennent chacune un ou des fusible(s) électrique(s) ou un ou des disjoncteur(s) appelés dans la suite moyen de protection contre les surintensités, qui, en cas de courant prédéterminé maximum, respectivement fonde(nt) ou ouvre leur contact pour couper l'alimentation électrique de la machine électrique tournante après un certain temps (temps nécessaire à, respectivement, la fusion ou au déclenchement).

Les moyens de protections contre les surintensités peuvent aussi être reliés électriquement en amont de la machine électrique tournante.

Ces moyens de protection contre les surintensités permettent d'éviter de détériorer la machine électrique tournante ou son environnement dû à la chaleur produite par la surintensité. Par exemple, dans le cas d'un démarreur, la chaleur produite par un démarreur en surintensité provoque une chaleur qui peut endommager les appareils dans le compartiment moteur d'un véhicule.

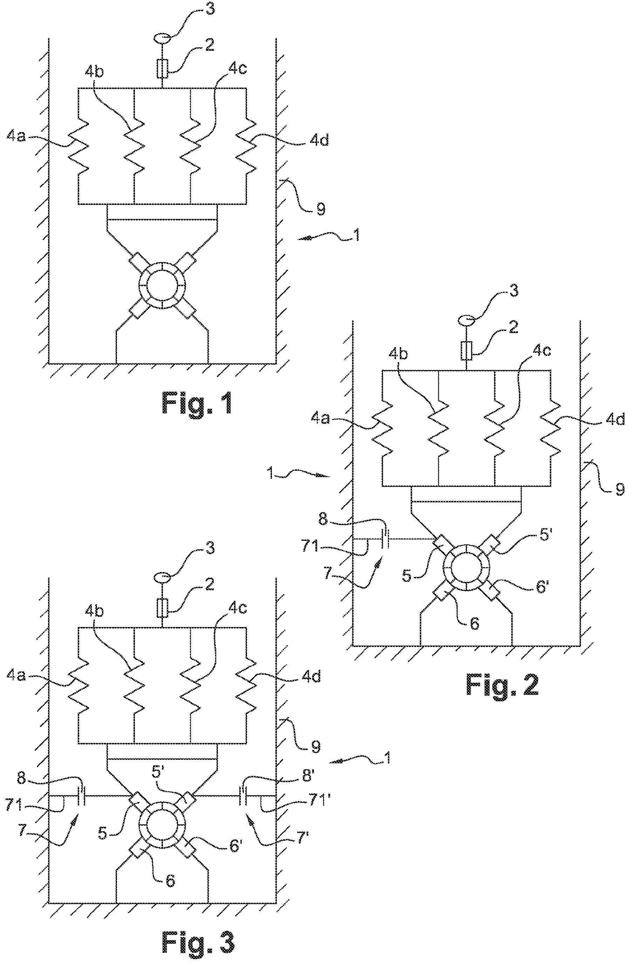

Un exemple d'une machine électrique 1 comprenant un fusible 2 est représenté en figure 1. Le fusible 2 est monté en série entre une borne d'alimentation 3 de la machine électrique 1 et les enroulements 4a, 4b, 4c, 4d du stator de la machine électrique tournante 1.

Dans une machine électrique à courant continu, il est connu que le courant augmente fortement si le rotor est bloqué en rotation. Cette augmentation du courant peut atteindre le courant prédéterminé maximum du moyen de protection, équivalent à une surintensité. Dans certains cas de fonctionnement normal d'une machine électrique tournante, le rotor peut être bloqué en rotation pendant plusieurs secondes (appelé temps de blocage dans la suite). C'est notamment le cas pour les machines électriques tournantes dans les démarreurs, lors d'une utilisation normale pour un démarrage d'un moteur thermique.

Il s'en suit que le moyen de protection doit être calibré de façon à ce qu'il ne puisse pas fondre ou ouvrir son contact pendant un temps prédéterminé alors que le courant le traversant est égal ou supérieure au courant maximum prédéterminé.

Le temps prédéterminé est déterminé par l'homme du métier de façon usuelle en fonction du temps de blocage de la machine électrique tournante en utilisation normal. Par exemple, l'homme du métier dans le domaine des démarreurs, détermine le temps prédéterminé de façon usuel en fonction du type de moteur thermique à démarrer, du type de démarreur et de l'environnement le plus défavorable choisi par les constructeurs automobiles pour démarrer le moteur thermique.

Par exemple, pour un démarreur, la calibration du moyen de protection contre les surintensités, en l'occurrence un fusible, est choisie pour que le fusible fonde lorsque le rotor est bloqué au delà du temps prédéterminé nécessaire pour le démarrage de la machine thermique.

Autrement dit, pour un démarreur, le calibrage du moyen de protection contre les surintensité est choisie pour d'une part fondre ou ouvrir son ou ses contact(s), lorsque le temps d'un courant traversant la machine électrique tournante, ayant son rotor bloqué en rotation, égale ou supérieure au courant prédéterminé maximum est plus long que le temps prédéterminé nécessaire au démarrage du moteur thermique mais doit aussi ne pas fondre ou ouvrir son ou ses contacts pendant le temps prédéterminé lorsque le courant le traversant est égale au courant traversant la machine électrique tournante ayant son rotor bloqué en rotation.

Cependant, lorsque la machine fonctionne à vide (c'est-à-dire sans charge ou à très faible charge) la vitesse de rotation à vide du rotor entraîne un échauffement de la machine électrique 1 dû notamment au frottement mécanique entre les balais et le collecteur. Par faible charge on entend de 0 à 25% de la charge nominale. Cet échauffement augmente la température de l'environnement dans lequel la machine électrique tournante 1 est située pouvant endommager les appareils ou pièces situés dans cet environnement. Par exemple, dans le cas d'un démarreur relié à un moteur thermique d'un véhicule, lesquels sont situés dans un compartiment moteur, lorsque le démarreur tourne à vide, c'est-à-dire que le moteur thermique est débrayé par rapport au rotor du démarreur, c'est notamment le cas en phase de survitesse (lorsque le pignon du démarreur, entraîné par le moteur thermique, tourne plus vite que la vitesse de l'arbre d'entraînement entraîné en rotation par le rotor du démarreur), la température du démarreur peut endommager des appareils situés dans le compartiment moteur du véhicule, notamment des composants électroniques qui sont de plus en plus présent dans les véhicules.

Le courant traversant le fusible de la machine électrique, lorsque celui-ci fonctionne à vide, appelé aussi courant à vide, (environ 10% du courant de blocage), ainsi que l'élévation de la température environnant le moyen de protection de surintensité, en l'occurrence le fusible 2, peut être trop faible pour que le fusible 2 puisse fondre, même en cas d'utilisation prolongé du démarreur en utilisation à vide.

Une solution consisterait donc de choisir un fusible dont le calibre est choisit pour qu'il puisse fondre à la fois lorsque le temps d'un courant à vide traversant le fusible dépasse un premier temps prédéterminé et à la fois lorsque le temps d'un courant traversant la machine électrique tournante ayant son rotor bloqué dépasse un second temps prédéterminé (le temps prédéterminé pour l'état de blocage) sans que celui-ci ne fonde dans les cas susmentionnés. Il existe ces fusibles qui ont un volume beaucoup plus important qu'un fusible de taille standard (c'est-à-dire : un fusible dont le calibrage est choisi pour répondre seulement à un des deux cas (blocage ou à vide). Ce volume trop imposant peut engendrer beaucoup de transformation dans la machine électrique ou dans son environnement dans lequel il est situé ; par exemple, pour un démarreur, le compartiment moteur d'un véhicule.

De plus, pour certains calibres demandés, notamment le cas pour certain des démarreurs de véhicule, il n'existe pas actuellement de fusible ayant un calibre pouvant résoudre ces deux cas (cas de blocage et à vide).

Un dispositif de protection thermique pour une machine électrique tournante est connu de GB 621 035A. Un démarreur pour une véhicule automobile est connu de FR 2 949 626 A1.

Le but de la présente invention est donc de fournir une machine électrique tournante comprenant un système permettant de couper l'alimentation électrique de la machine électrique tournante dans les deux cas susmentionnés (en cas de blocage et en cas à vide) en étant moins volumineux que le volume d'un fusible permettant de couper le courant dans les deux cas.

La invention est définit par la revendication 1. Des modes de réalisation préférés sont définit par les revendications dépendantes.

Plus particulièrement, l'invention vise à fournir une machine électrique tournante comprenant au moins une première borne et une seconde borne d'alimentation et un circuit électrique connecté à ces deux bornes, le circuit électrique comprenant au moins un organe résistif tel que une bobine d'excitation.

La machine électrique tournante comprend en outre un dispositif de protection thermique disposé dans la machine électrique comprenant un premier conducteur électrique étant une partie du châssis de la machine, ce premier conducteur électrique étant relié électriquement à la seconde borne, un organe sensible à la chaleur ayant des caractéristique pour se déformer au-delà d'une température prédéterminée, agencé dans la machine électrique pour se déformer au-delà d'une température prédéterminée,
un moyen mobile de connexion agencé pour pouvoir shunter la bobine d'excitation en connectant le premier conducteur à un second un conducteur monté en amont de la bobine d'excitation pour former un circuit électrique au moins 30 fois moins résistant que la résistance de la bobine d'excitation en parallèle à cette dernière. L'organe sensible à la chaleur est agencé pour que sa déformation active mécaniquement le moyen de connexion du dispositif de protection thermique pour qu'il connecte électriquement le premier conducteur à un second conducteur du circuit électrique relié directement électriquement à l'entrée de la bobine d'excitation, le second conducteur ayant un potentiel électrique différent de la seconde borne avant l'activation du moyen de connexion, et en ce que lorsque le moyen de connexion est désactivé, le dispositif de protection est déconnecté électriquement du circuit électrique.

L'organe sensible à la chaleur met un certain temps pour se déformer à la température prédéterminée. La température prédéterminée correspond de préférence à la température à l'intérieure de la machine qui peut endommager les appareils/organes se trouvant dans le même environnement de la machine électrique tournante. Cependant, il est possible aussi de choisir une température prédéterminée de 1 ou quelques degrés Celsius en dessous de la température pouvant engendrer des détérioration mais suffisamment au dessus d'une température normal dans des conditions extrêmes pour éviter que l'organe sensible à la chaleur ne se déforme.

Le fait d'agencer un organe sensible à la chaleur dans la machine électrique tournante permettant de connecter électriquement la première borne à un organe résistif du circuit électrique comprenant au moins la bobine d'excitation lorsqu'une température prédéterminée est atteinte, permet d'avoir un circuit électrique de moins grande impédance que celui de la machine en fonctionnement normal.

De plus, le dispositif de protection thermique ne comprend pas d'organe électrique consommant du courant lorsque le moyen de connexion est désactivé.

De plus, le fait d'utiliser la bobine d'excitation comme organe résistif permet d'une part éviter un court circuit et d'autre part être dépourvue d'un organe résistif engendrant un encombrement dans la machine électrique.

En effet, l'organe résistif du rotor est shunté, entraînant une diminution de l'impédance de la machine électrique tournante. Ainsi, le courant traversant la machine (dont plus de 50% passe par le premier et second conducteur) augmente jusqu'à un courant prédéterminé (I=U/R). Ainsi, il est possible, par exemple quand la machine tourne à vide et qu'elle atteint une température prédéterminée, d'augmenter le courant jusqu'à assurer qu'un dispositif de protection, tel que, un fusible ou un disjoncteur agencé pour déconnecter électriquement la machine électrique tournante en cas de surintensité, puisse couper l'alimentation de la machine électrique dans un temps prédéterminé.

Le calibre d'un fusible ou d'un disjoncteur est une valeur de courant spécifique pendant un temps précis pour lequel le fusible va fondre ou qu'il ouvre son ou ses contact(s). Un moyen de protection contre les surintensités met donc un temps prédéterminé pour déconnecter électriquement le circuit électrique de la machine électrique tournante pour un courant spécifique le traversant supérieur ou égale à une valeur de courant dite nominale (valeur du courant minimum pour laquelle le fusible va fondre). Le temps de fusion est variable en fonction de la température ambiante.

Le dispositif de protection permet en cas de température dépassant une température prédéterminée pouvant correspondre à une anomalie, de diminuer l'impédance de la machine électrique tournante afin que la valeur du courant traversant la machine électrique tournante soit suffisamment élevée pour que le moyen de protection contre les surintensités coupe l'alimentation de la machine électrique tournante. Par exemple, la valeur de l'impédance de la machine, lorsque le dispositif de protection est activé, est déterminée pour que la valeur du courant traversant la machine doit au moins atteindre la valeur du courant minimum pour laquelle le fusible ou le disjoncteur va respectivement fondre ou se déclencher. De manière général, la résistance de la bobine d'excitation est suffisamment faible pour déclencher le moyen de protection.

Ainsi, le dispositif de protection thermique de l'invention permet au dispositif de protection électrique de la machine électrique de déconnecter cette machine dans les deux cas de disfonctionnement (dans le cas un fonctionnement à vide qui dure plus longtemps qu'un temps prédéterminé et dans le cas du rotor bloqué qui dure plus longtemps qu'un second temps prédéterminé).

A cette fin, la présente invention propose une machine électrique tournante comprenant :
- au moins une première borne et une seconde borne et un circuit électrique connecté à ces deux bornes, le circuit électrique comprenant une bobine d'excitation,
- un dispositif de protection thermique disposé dans la machine électrique comprenant :
   un premier conducteur électrique étant une partie du châssis de la machine, ce premier conducteur électrique étant relié électriquement à la seconde borne,
   un organe sensible à la chaleur, déconnecté électriquement du circuit électrique, agencé dans la machine électrique pour se déformer au-delà d'une température prédéterminée,
   dans laquelle, au-delà d'une température prédéterminée, la déformation de l'organe sensible à la chaleur active mécaniquement un moyen de connexion du dispositif de protection thermique pour qu'il connecte électriquement le premier conducteur électrique à un second conducteur du circuit électrique relié directement électriquement en amont de la bobine d'excitation, le second conducteur ayant un potentiel électrique différent de la seconde borne avant l'activation du moyen d de connexion.

Par relier électriquement directement deux organes, on entend le fait qu'il n'y a pas d'organe électrique relié électriquement entre les deux organes autre qu'un conducteur.

Par conducteur, on entend un organe électrique de faible résistance ayant pour but de relier un organe électrique à un autre organe électrique, par exemple un conducteur peut être tel qu'un câble, un contact électrique (interrupteur), des balais, ou collecteur.

Ainsi, comme cela est expliqué plus haut, l'organe sensible à la chaleur active le moyen de connexion formant un circuit électrique « shuntant » un organe résistif du circuit électrique de la machine. Il s'en suit que la résistance équivalente de la machine diminue et donc que le courant le traversant augmente formant une surintensité jusqu'à ce que le moyen de protection contre les surintensités se déclenche (par exemple un fusible qui fond ou un disjoncteur qui ouvre son ou ses contacts) et coupe l'alimentation de la machine électrique tournante. De cette façon, on résout le problème en permettant de couper l'alimentation électrique de la machine électrique tournante dans les deux cas susmentionnés. Le second dispositif de protection peut être d'une petite taille et peut être placé dans la machine électrique tournante sans augmenter la taille de celle-ci. Il s'ensuit qu'on résout le problème sans modifier la taille de la machine électrique tournante.

De plus le dispositif de protection thermique est dépourvu d'organe électrique consommant du courant pendant un fonctionnement normal de la machine. Cela est particulièrement dû au fait que l'organe sensible à la chaleur est autonome pour ne consommer de courant. En effet, l'organe sensible à la chaleur est agencé dans une zone de la machine dont la température varie de plusieurs degrés en fonction de la chaleur engendrée par les organes mécaniques.

Suivant des modes de réalisation préférés, la machine comprend une ou plusieurs des caractéristiques suivantes :
Le moyen de connexion peut comprendre une pièce conductrice électriquement mobile entre une position bloquée et une position court-circuit, dans laquelle la pièce mobile conductrice est agencée pour que, en position bloqué, il est isolé électriquement du premier conducteur ou à l'organe du circuit électrique ayant un potentiel électrique différent de la seconde borne et en position court-circuit, il relie électriquement la première borne au premier conducteur, et dans laquelle l'organe sensible à la chaleur est agencé pour maintenir en position bloquée la pièce mobile conductrice et lorsqu'il se déforme pour libérer la pièce mobile conductrice de la position bloquée pour qu'elle soit libre de se déplacer de la position bloquée à la position court-circuit

La machine peut comprendre en outre un moyen de déplacement pour permettre de déplacer la pièce mobile conductrice de la position bloquée à la position court-circuit.

Selon un autre mode de réalisation, le moyen de connexion peut se déplacer de la position bloquée à la position court-circuit lorsqu'il est libéré par gravitation.

Le circuit peut comprendre des balais positifs, et dans laquelle l'organe sensible à la chaleur est agencé pour, lorsqu'il se déforme, permettre de relier électriquement un des balais au premier conducteur.

La machine peut comprendre en outre un porte-balai conducteur électriquement avec son balai, l'organe sensible à la chaleur permettant par le biais du moyen de connexion de connecter électriquement le premier conducteur et le porte-balai.

La pièce mobile conductrice et le porte-balai peuvent être agencés pour coopérer en formant une liaison glissière entre eux.

La machine peut comprendre en outre un arbre rotor, une bobine inductrice et un collecteur, un balai positif relié électriquement à la première borne, et un ressort entre le balai et le premier conducteur pour pousser le balai vers le connecteur, formant aussi le moyen de déplacement de la pièce mobile conductrice, et dans laquelle, l'organe sensible à la chaleur se déplace, lorsqu'elle a atteint la température prédéterminée, pour permettre au ressort de déplacer la pièce conductrice mobile d'une position initiale à une position finale en contact avec le premier conducteur.

Le dispositif de protection peut comprendre en outre un organe d'isolation monté entre la pièce mobile conductrice et le ressort.

La cage du balai peut être reliée électriquement à la première borne par le biais de la pièce mobile conductrice en position bloquée.

Le moyen de connexion peut être l'organe sensible à la chaleur.

La machine électrique tournante peut aussi être une machine électrique tournante à courant continu.

La machine peut en outre comprendre un deuxième système de protection.

Le second conducteur peut être un balai d'alimentation positive relié électriquement à la pièce mobile conductrice et le premier conducteur électrique est relié à la masse.

Le premier conducteur peut être relié à la seconde borne par le biais d'un organe résistif.

Le circuit électrique peut comprendre en outre des enroulements pour former le stator. Les enroulements peuvent être en amont ou en aval électriquement du second conducteur ou encore en parallèle avec le second conducteur.

Dans le cas d'un montage en aval, le premier conducteur est relié électriquement à la seconde borne par le biais des enroulements du stator pour éviter un court-circuit franc.

La machine électrique tournante peut comprendre en outre des aimants pour former le stator. Dans ce cas, le second conducteur est relié électriquement à la première borne de la machine électrique tournante et le dispositif de protection peut comprendre une résistance qui est alimenté électriquement entre le premier et second conducteur lorsque le moyen de connexion est activé.

La machine électrique tournante peut en outre comprendre un moyen de protection contre les surintensités. Ce moyen de protection contre les surintensités peut être un fusible ou un disjoncteur. Il peut être monté en amont ou en aval électriquement de la bobine d'excitation. Dans le cas d'une machine électrique tournante comprenant des enroulements pour former le stator, le moyen de protection peut être monté entre en amont ou en aval électriquement de la bobine d'excitation.

Par monté en amont électriquement d'un organe électrique, on entend monté entre la première borne et l'organe électrique.

Par monté en aval électriquement d'un organe électrique, on entend monté entre la seconde borne et l'organe électrique.

L'invention à trait aussi par une machine comprenant en outre le fait que le moyen de connexion, le premier et second conducteur soit agencés pour former un circuit en parallèle de la bobine d'excitation lorsque le moyen de connexion est activé et en ce que au moins un des premier ou second conducteur est relié électriquement directement à la bobine d'excitation.

La machine peut comprendre en outre le fait que l'organe sensible à la chaleur est agencé dans la machine pour être chauffé majoritairement par les frottements mécanique de la machine et la résistivité de la bobine d'excitation.

L'invention a trait aussi à un démarreur pour véhicule automobile comprenant une machine électrique tournante précédemment décrite.

L'invention à aussi trait à un système de protection d'une machine électrique contre une surchauffe comprenant une machine électrique tournante précédemment décrit et un moyen d'alimentation électrique comprenant une première borne et une seconde borne reliées électriquement respectivement à la première et seconde borne de la machine électrique tournante, et un fusible en amont de la machine électrique monté entre la première borne du moyen d'alimentation électrique et la première borne électrique de la machine électrique tournante pour déconnecter une borne électrique du moyen d'alimentation électrique de la machine électrique tournante lorsque le courant traversant le fusible dépasse une valeur prédéterminée pendant un temps prédéterminé.

Par relier électriquement deux organes électriques, on entend relié électriquement une borne de chaque organe électrique par un organe conductrice électriquement tel que un câble ou pièce de métal.

Par différence de potentielle V, on entend une différence de potentielle supérieure à 10% de la différence de potentielle aux bornes de la machine.

Par organe résistif on entend un organe dans la machine électrique tournante tel que, à ses bornes il y a une différence de potentielle V lorsque la machine électrique tournante est alimentée électriquement.

D'autres caractéristiques et avantages de l'invention apparaîtront à la lecture de la description qui suit d'un mode de réalisation préféré de l'invention, donnée à titre d'exemple et en référence au dessin annexé.
La figure 1 représente un schéma de principe d'un système de protection de l'art antérieur.
La figure 2 représente un schéma de principe d'un premier mode de réalisation d'un système de protection selon l'invention.
La figure 3 représente un schéma de principe selon un second mode de réalisation d'un système de protection.
La figure 4 représente une vue éclatée d'un premier mode de réalisation d'un dispositif de protection du système de protection.
La figure 5 représente une vue en perspective du premier mode de réalisation du dispositif de protection et une partie du rotor de la machine électrique tournante.
La figure 6 représente une vue en coupe d'un second mode de réalisation monté sur la machine électrique.
La figure 7 représente une vue en coupe d'une partie du deuxième mode de réalisation du dispositif de protection.
La figure 8 représente une vue éclatée d'une partie du deuxième mode de réalisation du dispositif de protection.
La figure 9 représente une vue en coupe d'une machine électrique du second mode de réalisation comprenant deux dispositifs de protection thermique selon le deuxième mode de réalisation.

Bien entendu, la présente invention n'est pas limitée aux exemples et aux modes de réalisation décrits et représentés, mais elle est susceptible à de nombreuses variantes accessibles à l'homme de l'art.

La figure 2 représente un schéma de principe d'un premier mode de réalisation du système de protection de l'invention. Le système de protection comprend une machine électrique tournante 1 représenté schématiquement sous forme simplifiée. La machine électrique tournante est, en l'occurrence, une machine à courant continu. La machine est d'une part connecté électriquement par le biais d'un moyen de protection contre les surintensités, en l'occurrence un fusible 2, à une borne positive 3 (par exemple d'une batterie non représentée) et d'autre part à une seconde borne formant la masse de la machine, correspondant au châssis 9 de la machine électrique à courant continu. Par châssis 9, on entend le flasque palier avant et arrière d'une machine électrique tournante 1. Le châssis 9 peut comprendre en outre un boîtier enfermant le stator de la machine électrique tournante. Le stator peut aussi faire partie du châssis 9.

La machine électrique tournante 1 comprend un stator et un rotor. La machine électrique tournante 1 comprend un circuit électrique connecté à ces deux bornes. Le circuit comprend une bobine d'excitation, en l'occurrence montée sur le rotor et des enroulements 4a, 4b, 4c, 4d, en l'occurrence quatre enroulements qui sont représentés sur la figure 2 monté dans le stator. La bobine d'excitation est alimentée électriquement par le biais d'au moins un balai positif 5 et au moins un balai négatif 6. En l'occurrence, il y a deux balais positifs 5, 5' et deux balais négatifs 6, 6'. Les deux balais 6, 6' sont reliés à la masse de machine électrique tournante 1 par le biais en l'occurrence du châssis 9 de la machine électrique tournante 1. Le châssis 9 est relié à une borne négative, d'une alimentation, par exemple une batterie non représentée.

Les deux balais positifs ou/et négatifs peuvent être montés axialement, c'est-à-dire suivant l'axe X de machine électrique tournante 1 ou répartis angulairement de préférence régulièrement autour du collecteur de la machine électrique tournante 1.

Le fusible 2 est monté entre la borne positive 3 et les enroulements 4a, 4b, 4c, 4d. Les enroulements 4a, 4b, 4c, 4d sont montés en parallèle les uns avec les autres. L'ensemble des enroulements 4a, 4b, 4c, 4d est monté entre le fusible 2 et les deux balais positifs 5, 5'. La bobine d'excitation, non représentée, est donc montée en série avec l'ensemble des enroulements 4a, 4b, 4c, 4d. Le montage de la machine des enroulements et de la bobine d'excitation peut aussi être monté autrement. D'autres exemples de montage sont décris dans la suite de la description.

La machine électrique tournante 1 comprend en outre un dispositif de protection thermique 7. Le dispositif de protection thermique 7 comprend un premier conducteur électrique 71 relié électriquement à la seconde borne, en l'occurrence le premier conducteur 71 est relié électriquement à la masse au châssis 9. Le dispositif de protection thermique 7 comprend en outre un organe sensible à la chaleur 8 agencé pour se déformer au-delà d'une température prédéterminée. L'organe sensible à la chaleur est notamment disposé dans une zone de la machine dont la chaleur varie en fonction principalement de la chaleur créée par les frottements mécaniques.

Le dispositif de protection thermique est raccordé d'autre part à un second conducteur relié directement électriquement à la bobine d'excitation par le biais d'un balai.

L'organe sensible à la chaleur 8 est agencé pour activer mécaniquement par sa déformation au-delà d'une température prédéterminé un moyen de connexion connectant électriquement le premier conducteur 71 au circuit électrique. Le moyen de connexion peut être une pièce mobile conductrice, un contact, une lamelle permettant de relier le premier conducteur 71 à un organe (appelé ensuite second conducteur) du circuit électrique ayant un potentiel autre que celui du premier conducteur 71. Autrement dit, il y a une différence de potentielle V entre le premier conducteur 71 et le second conducteur, lorsque l'organe sensible à la chaleur ne s'est pas déformé et il n'y a plus de différence de potentielle V lorsque l'organe sensible à la chaleur a activé le moyen de connexion.

En l'occurrence, le dispositif de protection thermique 7 permet de former un circuit électrique en parallèle avec la bobine d'excitation lorsque l'organe sensible à la chaleur 8 se déforme. En particulier, le dispositif de protection thermique 7 connecte, par le biais du moyen de connexion, le premier conducteur à un des deux balais positifs 5, 5', en l'occurrence, le balai 5. La liaison électrique formé, par le biais du moyen de connexion, du premier conducteur 71 au balai positif 5, a une impédance suffisamment faible pour que la valeur de l'impédance de la machine électrique tournante 1 soit suffisamment faible pour que le courant traversant la machine électrique tournante 1 permet d'activer le moyen de protection contre les surintensité avant un temps prédéterminé. Ainsi, la liaison électrique formant un circuit électrique, formé par le dispositif de protection thermique 7, lorsque l'organe sensible à la chaleur 8 s'est déformé, a une impédance choisie, tel que la résistance équivalente de la machine électrique tournante 1 diminue suffisamment pour que le courant traversant la machine électrique tournante 1 fonde le fusible 2 dans une période de temps voulu T.

La température prédéterminée est choisie de façon à ce que la chaleur transmise par la machine électrique tournante 1 dans l'environnement ne dépasse pas un seuil de température, afin d'éviter que l'environnement dans laquelle se situe la machine électrique tournante 1 atteigne une température engendrant des défaillances sur les organes, produits, dispositifs (appelés dans la suites pièces environnantes) autour de la machine électrique tournante 1.

Le courant traversant la machine électrique tournante 1 peut être, par exemple, supérieur ou égal au courant de surintensité dans le cas du rotor de la machine électrique tournante 1 bloqué, afin de déconnecter rapidement la machine électrique tournante 1.

L'organe sensible à la chaleur 8 agencé dans la machine électrique tournante 1 a des caractéristiques (matériaux, épaisseur, forme, etc) tels que le temps de déformation de l'organe sensible à la chaleur 8, lorsque sa température atteint la température prédéterminée, soit dans une plage de temps permettant au fusible 2 de fondre dans une plage de temps satisfaisante pour ne pas endommager les pièces environnants. Autrement dit, l'organe sensible à la chaleur 8 est choisie pour que sa déformation se fasse dans un temps assez court pour que le temps total (temps de fusion de l'organe sensible à la chaleur 8 plus le temps de fusion du fusible 2) soit dans une plage de temps prédéterminée pour ne pas endommager les pièces environnantes.

Deux modes de réalisation du dispositif de protection 7 seront décrits plus en détail dans la suite de la description.

Selon un second mode de réalisation, représenté de façon schématique à la figure 3, d'un système de protection de l'invention, le système comprend en outre du système de protection précédemment décrit, un second dispositif de protection thermique 7'. Ce second dispositif de protection thermique 7' est connecté entre le second balai positif 5' et la masse. Il peut être identique au dispositif de protection thermique 7 décrit dans le premier mode de réalisation d'un système de protection de l'invention.

Cela permet d'avoir une redondance de protection afin de diminuer les risques d'un échauffement trop important endommageant les pièces environnantes, dû à un défaut de fonctionnement du dispositif de protection thermique 7 décrit dans le premier mode de réalisation du système de sécurité.

Selon d'autres modes de réalisation non représentés, le ou un des ou les dispositifs de protection thermique 7 sont disposés en amont des enroulements. Autrement dit, le dispositif de protection thermique 7 est agencé pour connecter une borne d'alimentation 3, en l'occurrence la borne positive à l'autre borne d'alimentation, en l'occurrence à la masse.

Selon un autre mode de réalisation non représenté, les enroulements 4a, 4b, 4c, 4d et la bobine d'excitation ne sont pas montés en série mais en parallèle.

Selon un autre exemple non représenté, les enroulements 4a, 4b, 4c, 4d peuvent être remplacés par des aimants. Dans ce cas le dispositif de protection thermique 7 est placé pour mettre en contact la masse avec un conducteur situé électriquement entre la bobine d'excitation et la borne positive.

Selon un autre exemple non représenté, la machine électrique tournante 1 est une machine électrique tournante 1 triphasée. Dans ce cas, le système comprend au moins un dispositif de protection thermique 7 agencé pour connecter une borne des enroulements ou le neutre à respectivement soit la masse ou une autre phase, soit une phase. Dans le cas d'une machine électrique tournante 1 triphasée ayant un rotor comprenant une bobine d'excitation, le dispositif de protection thermique 7 peut être agencé pour connecter électriquement les deux bornes de la bobine d'excitation.

Il va être décrit maintenant, en détail, un premier mode de réalisation du dispositif de protection thermique 7.

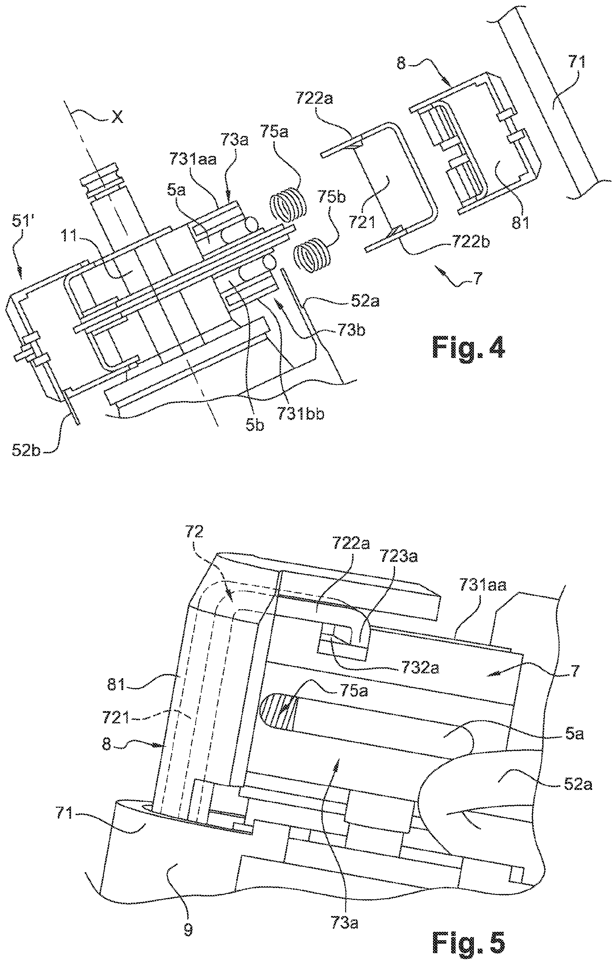

La figure 4 représente en éclaté, le premier mode de réalisation du dispositif de protection thermique 7 et une partie du rotor. La figure 5 représente une partie de ce dispositif de protection thermique 7 assemblé sur le rotor.

Dans cet exemple, la machine électrique tournante 1 est à courant continu et comprend un collecteur 11 et une bobine d'excitation (non représentée), montés sur le rotor de la machine électrique tournante 1.

Par avant et arrière, on entend, suivant l'axe X, représenté sur la figure 4, du rotor de la machine électrique tournante 1, l'arrière ce qui est le plus proche du palier arrière et l'avant ce qui est le plus proche du palier avant, sachant que le palier avant est plus proche du collecteur du rotor que de la bobine d'excitation.

Par radial, on entend une face, un côté, un rebord, qui est dans un plan perpendiculaire à l'axe X du rotor.

Par axial, on entend une face, un côté, un rebord, qui est dans un plan parallèle à l'axe X du rotor.

Dans l'exemple représenté sur la figure 4, la machine électrique tournante 1 comprend un premier et second ensemble porte-balai positif respectivement 51, 51', comprenant chacun un porte-balais avant 73a, arrière 73b, logeant respectivement chacun un balai positif avant 5a, arrière 5b, qui translate à l'intérieur du porte-balai correspondant. Des pièces du premier ensemble porte-balai positif et les pièces du dispositif de protection 7 sont représentés en éclaté sur la figure 4, tel que les portes balais 73a, 73b et balais positifs 5a, 5b. Les pièces du second ensemble porte-balai positif 51' ne sont pas représentés. Le premier ensemble 51 et le dispositif de protection 7 sont représentés assemblés sur la figure 5. Les balais négatifs et les deux portes balais négatifs ne sont pas représentés sur les figures 4 et 5. Les balais 5a, 5b, du premier et second ensemble porte-balai 51, 51' sont chacun reliés électriquement aux enroulements 4a, 4b, 4c, 4d (non représentés sur les figure 4 et 5) par le biais d'un câble 52a, 52b.

Il va être décrit maintenant en détail uniquement le premier ensemble porte-balai 51. Le second ensemble porte-balai 51' est de préférence identique, cela permet d'avoir le minimum de références de pièces à réaliser. Les porte-balais avant 73a et arrière 73b sont alignés axialement sur le collecteur 11. Le dispositif de protection thermique 7 est monté entre l'ensemble porte-balai 51 et le châssis 9 de la machine électrique tournante 1. Dans ce mode de réalisation, l'ensemble porte-balai 51 peut être isolant ou conducteur.

Le premier conducteur 71 du dispositif de protection thermique 7, est une partie du châssis 9 de la machine électrique tournante 1. Cela permet de réduire le nombre de pièce dans la machine électrique tournante 1.

Dans cet exemple de réalisation, le moyen de connexion du dispositif de protection thermique 7 comprend un organe électriquement conducteur, appelé dans la suite pièce mobile conductrice 72. La pièce mobile conductrice 72 est mobile d'une position bloquée à une position de court-circuit lorsque l'organe sensible à la chaleur 8 s'est déformé. La pièce mobile conductrice 72 peut se déplacer de la position bloquée à une position court-circuit par gravité ou par un moyen de déplacement. En position court-circuit, la pièce mobile conductrice 72 relie électriquement le premier conducteur à un organe du circuit électrique de la machine ayant un autre potentiel que le premier conducteur. En l'occurrence, la pièce mobile conductrice 72 est montée contre les porte-balais 73a, 73b et est reliée électriquement au même potentiel que les porte-balais ou balais positifs. Chaque balai est compressé contre le collecteur 11 afin d'établir un bon contact électrique par le biais d'un ressort 75a, 75b. Chaque ressort 75a, 75b est compressé entre le balai correspondant et la pièce mobile conductrice 72. Les ressorts 75a, 75b sont montés à l'intérieur des porte-balais 73a, 73b.

L'organe sensible à la chaleur 8 du dispositif de protection thermique 7, comprend une plaque 81 située entre une plaque 721 de la pièce mobile conductrice 72 et le premier conducteur 71 (une partie du châssis 9). Les ressorts 75a, 75b compressent donc d'une part chacun leur balai correspondant contre le collecteur 11 et d'autre part la pièce mobile conductrice 72 contre la plaque 81 de l'organe sensible à la chaleur 8. L'organe sensible à la chaleur 8 est représenté de façon transparente sur la figure 5.

L'épaisseur et la matière de la plaque 81 de l'organe sensible à la chaleur 8 sont choisies de façon à ce que la plaque 81 fonde lorsqu'elle atteint la température prédéterminée. Lorsque cette plaque 81 de l'organe sensible à la chaleur 8 fond, les ressorts 75a, 75b déplacent la pièce mobile conductrice 72.

Les ressorts 75a, 75b font donc aussi parti du dispositif de protection thermique 7. En effet, les ressorts sont un moyen de déplacement de la pièce mobile conductrice 72 jusqu'à ce qu'elle soit en contact avec le premier conducteur 71. Ce mode de réalisation du dispositif de protection thermique 7 a pour avantage d'utiliser des pièces déjà confectionnées et placées dans la machine électrique tournante 1 qui ont une seconde fonction. Il y a donc un gain de place par rapport à un dispositif de protection thermique 7 similaire dont on rajouterai un ressort pour déplacer l'organe sensible à la chaleur 8.

Lorsque la pièce mobile conductrice 72 est en contact avec le premier conducteur 71, elle est aussi en contact électrique avec le balai, en l'occurrence les balais 5a et 5b, par exemple par le biais du ressort 75a, 75b ou des porte-balais 73a, 73b conducteur électriquement ou un autre conducteur électriquement tel que un câble, provoquant ainsi un circuit électrique entre le balai positif et la masse. Ainsi, la résistance équivalente de la machine électrique tournante 1 est réduite. Il s'ensuit que le courant traversant la machine électrique tournante 1, passe aussi par le fusible 2 qui est calibré pour fondre en un temps prédéterminé.

Selon un autre mode de réalisation non représenté du dispositif de protection thermique 7 décrit précédemment, le dispositif de protection thermique comprend un seul ressort. Par exemple, il n'y a pas deux porte-balais accolés mais un seul.

Il va être décrit maintenant un exemple d'assemblage du mode de réalisation du dispositif de protection thermique 7 assemblé dans la machine électrique tournante 1.

La figure 5 représente seulement le porte-balai 73a avant. Les porte-balais 73a, 73b avant et arrière comprennent chacun deux parois radiales et latérales respectivement avant 731aa, et arrière 731ab, 731 bb latéral radial externe. La paroi latérale radiale avant du porte-balai arrière n'est pas représentée. Les porte-balais avant 73a et arrière 73b comprennent chacun respectivement sur la parois radiale avant 731aa et sur la paroi radiale arrière 731bb, du côté externe des parois du porte-balai, une rainure avant 732a et arrière de profondeur axiale, de largeur radiale et s'étendant perpendiculairement à l'axe X. La rainure arrière sur la paroi radiale arrière 731bb n'est pas représentée. Seule la rainure avant 732a sur la parois avant 731aa est visible sur la figure 5.

La pièce mobile conductrice 72 comprend des rebords avant et arrière 722a, 722b latéraux radiaux s'étendant à partir de deux côtés de la plaque 721 de la pièce mobile conductrice 72. Les rebords avant et arrière 722a, 722b latéraux radiaux longent et épousent la forme du côté externe respectivement de la paroi radiale 731aa avant du porte-balai avant 73a et de la paroi radiale 731bb externe arrière du porte-balai arrière 73b.

Les rebords avant et arrière 722a, 722b, comprennent respectivement des ergots avant 723a et arrière, montés respectivement à l'intérieure des rainures avant 732a et arrière, respectivement des parois 731aa, 731bb avant et arrière. Seule l'ergot avant 723a sur le rebord avant 722a est représentée, visible sur la figure 5.

La différence entre la largeur radiale des rainures avant 732a et arrière, et respectivement la largeur radiale des ergots avant 723a et arrière, est au moins supérieure à la distance entre la pièce mobile conductrice 72 et le premier conducteur 71. Ces ergots avant 723a et arrière, et les rainures avant 732a et arrière, permettent de guider le déplacement de la pièce mobile conductrice 72 le long de l'ensemble porte-balai.

Dans le cas, d'un porte-balai 73a, 73b électriquement conducteur, les ergots avant 732a et arrière, et les rainures avant 732a et arrière, peuvent être agencés pour que, lorsque l'organe sensible à la chaleur 8 a fondu, la pièce mobile conductrice 72 soit en contact avec le porte-balai 73a, 73b.

Dans le cas, d'un porte-balai 73a, 73b non électriquement conducteur, le ressort de balai 75a, 75b est choisi pour assurer le contact électrique entre la pièce mobile conductrice 72 et le balai.

Selon un autre exemple non représenté, le dispositif de protection thermique 7 peut comprendre en outre un moyen de connexion électrique reliant la pièce mobile conductrice 72 à un ou aux balai(s) avant 5a et arrière 5b, ou au câble 52a, reliant électriquement les balais avant 5a, arrière 5b aux enroulements 4a, 4b, 4c, 4d.

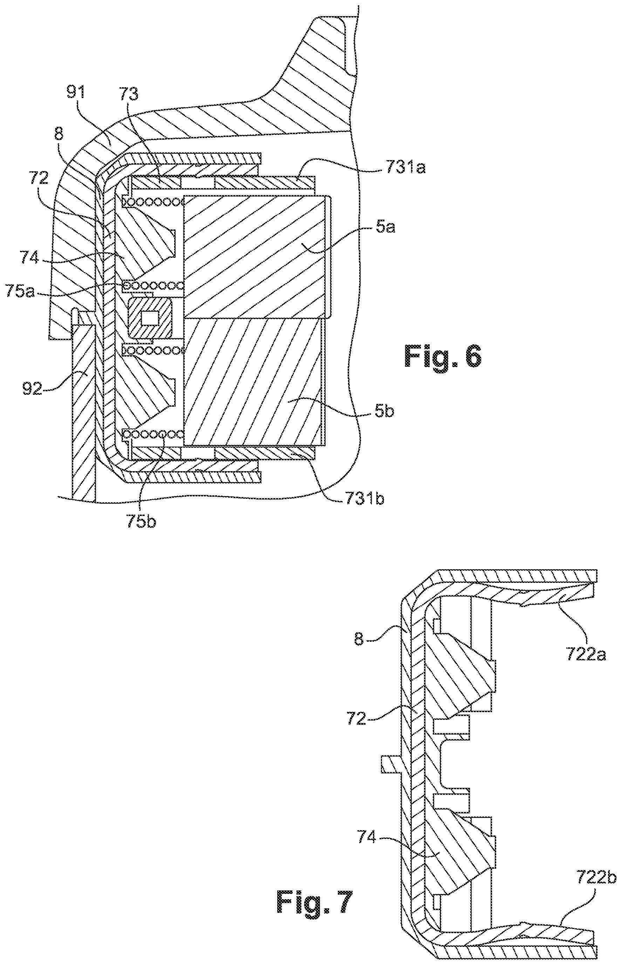

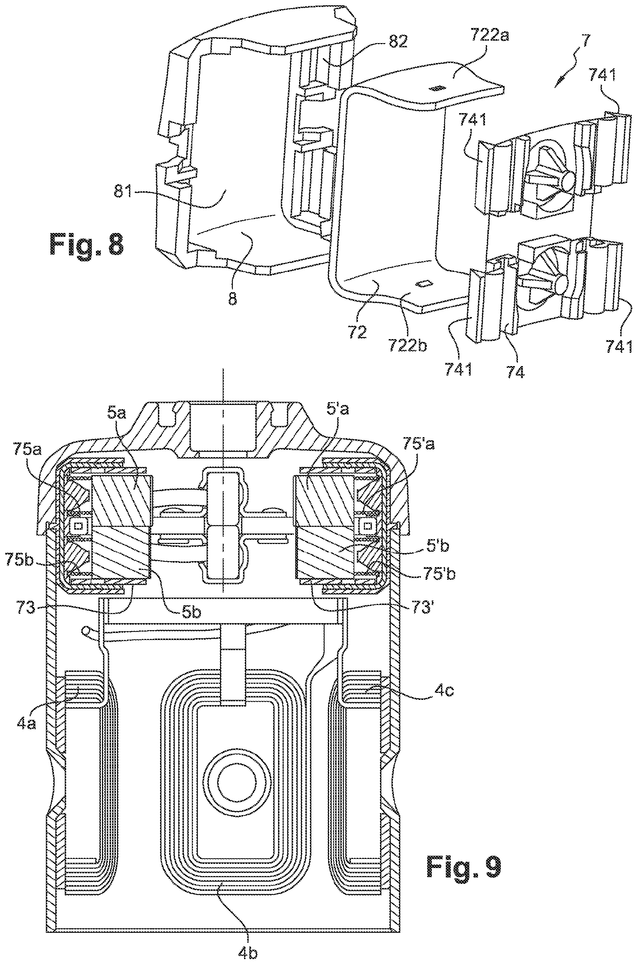

La figure 6 représente une vue en coupe d'un autre mode de réalisation du dispositif de protection thermique 7 et d'un autre mode de réalisation du porte-balai. Dans ce mode de réalisation, la machine électrique tournante 1 comprend deux porte-balais 73, 73' positifs portant chacun un balai avant 5a et un balai arrière 5b. Le porte-balai 73' est représenté sur la figure 9. La machine électrique tournante 1 pourrait comporter qu'un seul porte-balais 73 et le ou chaque porte-balai pourrait porter un seul balai. Les porte-balais 73, 73' sont dans ce mode de réalisation électriquement conducteurs. Le dispositif de protection thermique 7 du dispositif de protection thermique 7 représenté à la figure 4 et 5, comprend en outre un organe d'isolation électrique 74, située entre les ressorts 75a, 75b et la pièce mobile conductrice 72. Cet organe d'isolation électrique 74 permet d'éviter que le courant passe des balais 5a, 5b à la pièce mobile conductrice 72 par le biais des ressort 75a, 75b. Cela a pour avantage de ne pas choisir des ressorts 75a, 75b qui permettent de subir les contraintes électriques mais uniquement d'assurer d'une part la fonction de moyen de plaquage de la pièce mobile conductrice 72 contre le premier conducteur 71 lorsque l'organe sensible à la chaleur 8 s'est déformé et d'autre part la fonction d'appui du balai 5a, 5b contre le collecteur 11. En l'occurrence, dans ce mode de réalisation, le premier conducteur est formé à la fois par une partie du palier avant 91 et une partie du stator 92.

L'organe d'isolation électrique 74 comprend une plaque isolante et en outre deux saillies avant 742 et arrière 743 agencées chacune pour être à l'intérieur du ressort 75a, 75b respectivement du porte bobine 73. Cela permet de maintenir les ressorts lorsqu'ils se détendent.

Dans ce mode de réalisation, les rebords latéraux 722a, 722b avant et arrière de la pièce mobile conductrice 72 comprennent une forme ondulée convexe vers les parois radiales 731a et 731b du porte-balai 73. La forme convexe de chaque rebords latéraux 722a, 722b forme un moyen de rappel élastique permettant d'assurer le contact entre les rebords latéraux 722a, 722b et les parois radiales 731a et 731b du porte-balai 73 afin d'assurer le contact électrique entre eux.

La figure 7 représente une vue en coupe d'une partie du dispositif de protection thermique 7, en l'occurrence, l'organe sensible à la chaleur 8, la pièce mobile conductrice 72 et la plaque d'isolation 74.

La figure 8 représente une vue éclatée de cette partie du dispositif de protection thermique 7. Selon un exemple de mode de réalisation de ce dispositif de protection, la plaque isolante 74 comprend des moyens d'attache agencés pour se fixer à l'organe sensible à la chaleur 8. En l'occurrence, l'organe sensible à la chaleur 8 comprend des rainures 82, dont deux sont visibles sur la figure 8, destinées à recevoir les moyens d'attache de la plaque isolante 74. Les moyens d'attache sont des encliquetages 741 qui s'emboîtent avec les rainures 82.

Ces moyens d'attaches de l'organe sensible à la chaleur 8 permettent de maintenir l'ensemble organe sensible à la chaleur 8, la pièce mobile conductrice 72 et la plaque isolante 74. Cela permet de monter cet ensemble avant d'être monté dans la machine électrique tournante 1. Cela facilite le montage et réduit le temps de montage de ces pièces sur le porte balai.

La figure 9 représente une vue en coupe d'une machine électrique tournante 1 selon l'axe X dépourvue de son rotor, comprenant deux dispositifs de protection thermique 7.

Selon un autre mode de réalisation du dispositif de protection thermique 7, le porte-balai n'est pas conducteur. Dans ce cas, la pièce mobile conductrice est reliée électriquement à un conducteur reliant les enroulements 4a, 4b, 4c, 4d aux balais positifs 5, par le biais, par exemple d'un câble.

Dans le cas d'une machine électrique tournante 1 pour démarreur, l'organe sensible à la chaleur 8 est agencé pour être capable de se déformer lorsque la température a atteint la température dans un démarreur qui tourne dans le vide pendant une durée de fonctionnement au-delà d'un fonctionnement normal.

## Revendications

1. Machine électrique tournante (1) comprenant :
- un stator et un rotor,
- au moins une première borne et une seconde borne formant la masse (9) de la machine (11) et un circuit électrique connecté à ces deux bornes, le circuit électrique comprenant une bobine d'excitation dans le rotor, des balais positifs (5, 5'), des balais négatifs (6, 6'),
- le stator étant formé par des aimants de la machine électrique ou par des enroulements du circuit électrique (4a-4d), la bobine d'excitation étant monté en série avec les enroulements (4a-4d),
- un dispositif de protection thermique (7) disposé dans la machine électrique comprenant :
▪ un premier conducteur électrique (71) relié électriquement à la seconde borne,
▪ un organe sensible à la chaleur (8), déconnecté électriquement du circuit électrique, agencé dans la machine électrique pour se déformer au-delà d'une température prédéterminée,
**caractérisé en ce que**, au-delà de la température prédéterminée, la déformation de l'organe sensible à la chaleur (8) active mécaniquement un moyen de connexion du dispositif de protection thermique (7) pour qu'il connecte électriquement le premier conducteur électrique (71) à un second conducteur du circuit électrique relié directement électriquement en amont de la bobine d'excitation, le second conducteur ayant un potentiel électrique différent de la seconde borne avant l'activation du moyen de connexion, et dans laquelle l'organe sensible à la chaleur (8) est agencé pour, lorsqu'il se déforme, permettre de relier électriquement un des balais positifs (5, 5') au premier conducteur électrique (71).

2. Machine électrique tournante (1) selon l'une quelconque des revendications précédentes, dans laquelle le moyen de connexion comprend une pièce conductrice (72) mobile entre une position bloquée et une position court-circuit,
dans laquelle la pièce mobile conductrice (72) est agencée pour que, en position bloquée, il est isolé électriquement du premier conducteur électrique (71) ou du second conducteur du circuit électrique ayant un potentiel électrique différent de la seconde borne et en position court-circuit, il relie électriquement la première borne au premier conducteur, et
dans laquelle l'organe sensible à la chaleur (8) est agencé pour maintenir en position bloquée la pièce mobile conductrice (72) et lorsqu'il se déforme pour libérer la pièce mobile conductrice (72) de la position bloquée pour qu'elle soit libre de se déplacer de la position bloquée à la position court-circuit.

3. Machine électrique tournante (1) selon la revendication 2, dans laquelle la machine comprend en outre un moyen de déplacement pour permettre de déplacer la pièce mobile conductrice (72) de la position bloquée à la position court-circuit.

4. Machine électrique selon l'une quelconques des revendications précédentes, comprenant un porte-balai conducteur électriquement avec son balai (5), l'organe sensible à la chaleur (8) permettant, par le biais du moyen de connexion, de connecter électriquement le premier conducteur électrique (71) au porte-balai.

5. Machine électrique selon la revendication 2, dans laquelle la pièce mobile conductrice (72) et le porte-balai sont agencés pour coopérer en formant une liaison glissière entre eux.

6. Machine électrique selon la revendication 2 et l'une quelconque des revendications 3 à 5, dans laquelle la machine comprend :
- un arbre rotor, comprenant une bobine inductrice et un collecteur (11),
- un des balais positifs (5,5') reliés électriquement à la première borne, et
- un ressort (75) entre le balai positif (5) et le premier conducteur électrique (71) pour pousser le balai positif (5) vers le connecteur, formant aussi le moyen de déplacement de la pièce mobile conductrice (72),
et dans laquelle, l'organe sensible à la chaleur (8) se déplace à la température prédéterminée pour permettre au ressort de déplacer la pièce mobile conductrice (72) d'une position initiale à une position finale en contact avec le premier conducteur (71).

7. Machine électrique selon la revendication 6, dans laquelle le dispositif de protection thermique (7) comprend en outre un organe d'isolation électrique (74) monté entre la pièce mobile conductrice (72) et le ressort (75).

8. Machine électrique selon l'une quelconque des revendications 4 à 7, dans laquelle la cage du balai positif (5) est reliée électriquement à la première borne par le biais de la pièce mobile conductrice (72) en position bloquée.

9. Machine électrique selon l'une quelconque des revendications précédentes, est une machine électrique continu.

10. Machine électrique selon l'une quelconque des revendications précédentes, comprenant un second dispositif de protection (7').

11. Machine électrique selon l'une quelconque des revendications précédentes, dans lequel le second conducteur est un balai d'alimentation positive (5) relié électriquement à la pièce mobile conductrice et en ce que le premier conducteur électrique (71) est relié à la masse.

12. Démarreur pour véhicule automobile, comprenant une machine électrique tournante (1) selon l'une quelconque des revendications précédentes.

13. Système de protection d'une machine électrique contre une surchauffe, comprenant :
- la machine électrique tournante (1) selon l'une quelconque des revendications 1 à 11,
- un moyen d'alimentation électrique comprenant une première borne et une seconde borne reliées électriquement respectivement à la première et seconde borne de la machine électrique tournante (1),
- un fusible (2) en amont de la machine électrique monté entre la première borne du moyen d'alimentation électrique et la première borne électrique de la machine électrique tournante (1) pour déconnecter une borne électrique du moyen d'alimentation électrique de la machine électrique tournante (1) lorsque le courant traversant le fusible (2) dépasse une valeur prédéterminée pendant un temps prédéterminé.

## Patentansprüche

1. Rotierende elektrische Maschine (1), umfassend:
- einen Stator und einen Rotor,
- mindestens eine erste Klemme und eine zweite Klemme, welche die Masse (9) der Maschine (11) bildet, und eine elektrische Schaltung, die mit diesen zwei Klemmen verbunden ist, wobei die elektrische Schaltung eine Erregerspule im Rotor, positive Bürsten (5, 5') und negative Bürsten (6, 6') umfasst,
- wobei der Stator von Magneten der elektrischen Maschine oder von Wicklungen der elektrischen Schaltung (4a-4d) gebildet wird, wobei die Erregerspule mit den Wicklungen (4a-4d) in Reihe geschaltet ist,
- eine in der elektrischen Maschine angeordnete thermische Schutzvorrichtung (7), welche umfasst:
▪ einen ersten elektrischen Leiter (71), der mit der zweiten Klemme elektrisch verbunden ist,
▪ ein wärmeempfindliches Organ (8), das von der elektrischen Schaltung elektrisch getrennt ist und in der elektrischen Maschine angeordnet ist, um sich jenseits einer vorbestimmten Temperatur zu verformen,
**dadurch gekennzeichnet, dass** jenseits der vorbestimmten Temperatur die Verformung des wärmeempfindlichen Organs (8) ein Verbindungsmittel der thermischen Schutzvorrichtung (7) mechanisch aktiviert, damit es den ersten elektrischen Leiter (71) mit einem zweiten Leiter der elektrischen Schaltung elektrisch verbindet, welcher der Erregerspule direkt elektrisch vorgeschaltet ist, wobei der zweite Leiter vor der Aktivierung des Verbindungsmittels ein elektrisches Potential aufweist, das von der zweiten Klemme verschieden ist, und wobei das wärmeempfindliche Organ (8) dazu ausgelegt ist, wenn es sich verformt, zu ermöglichen, eine der positiven Bürsten (5, 5') mit dem ersten elektrischen Leiter (71) elektrisch zu verbinden.

2. Rotierende elektrische Maschine (1) nach einem der vorhergehenden Ansprüche, wobei das Verbindungsmittel ein leitendes Teil (72) umfasst, das zwischen einer blockierten Position und einer Kurzschlussposition beweglich ist,
wobei das bewegliche leitende Teil (72) so ausgelegt ist, dass es in der blockierten Position von dem ersten elektrischen Leiter (71) oder von dem zweiten Leiter der elektrischen Schaltung, der ein von der zweiten Klemme verschiedenes elektrisches Potential aufweist, elektrisch isoliert ist, und dass es in der Kurzschlussposition die erste Klemme mit dem ersten Leiter elektrisch verbindet, und
wobei das wärmeempfindliche Organ (8) dazu ausgelegt ist, das bewegliche leitende Teil (72) in der blockierten Position zu halten, und wenn es sich verformt, das bewegliche leitende Teil (72) aus der blockierten Position freizugeben, so dass es sich frei aus der blockierten Position in die Kurzschlussposition bewegen kann.

3. Rotierende elektrische Maschine (1) nach Anspruch 2, wobei die Maschine außerdem ein Bewegungsmittel umfasst, um zu ermöglichen, das bewegliche leitende Teil (72) aus der blockierten Position in die Kurzschlussposition zu bewegen.

4. Elektrische Maschine nach einem der vorhergehenden Ansprüche, welche einen elektrisch leitenden Bürstenhalter mit seiner Bürste (5) umfasst, wobei das wärmeempfindliche Organ (8) ermöglicht, durch das Verbindungsmittel den ersten elektrischen Leiter (71) mit dem Bürstenhalter elektrisch zu verbinden.

5. Elektrische Maschine nach Anspruch 2, wobei das bewegliche leitende Teil (72) und der Bürstenhalter dazu ausgelegt sind, zusammenzuwirken, indem sie zwischen sich eine Gleitverbindung bilden.

6. Elektrische Maschine nach Anspruch 2 und einem der Ansprüche 3 bis 5, wobei die Maschine umfasst:
- eine Rotorwelle, die eine Induktionsspule und einen Kollektor (11) umfasst,
- eine der positiven Bürsten (5,5'), die mit der ersten Klemme elektrisch verbunden sind, und
- eine Feder (75) zwischen der positiven Bürste (5) und dem ersten elektrischen Leiter (71), um die positive Bürste (5) in Richtung des Verbinders zu drücken, und die auch das Bewegungsmittel des beweglichen leitenden Teils (72) bildet,
und wobei sich das wärmeempfindliche Organ (8) bei der vorbestimmten Temperatur bewegt, um der Feder zu ermöglichen, das bewegliche leitende Teil (72) aus einer Anfangsposition in eine Endposition im Kontakt mit dem ersten Leiter (71) zu bewegen.

7. Elektrische Maschine nach Anspruch 6, wobei die thermische Schutzvorrichtung (7) außerdem ein Organ zur elektrischen Isolation (74) umfasst, das zwischen dem beweglichen leitenden Teil (72) und der Feder (75) angebracht ist.

8. Elektrische Maschine nach einem der Ansprüche 4 bis 7, wobei der Rahmen der positiven Bürste (5) mit der ersten Klemme über das bewegliche leitende Teil (72) in der blockierten Position elektrisch verbunden ist.

9. Elektrische Maschine nach einem der vorhergehenden Ansprüche, welche eine Gleichstrommaschine ist.

10. Elektrische Maschine nach einem der vorhergehenden Ansprüche, welche eine zweite Schutzvorrichtung (7') umfasst.

11. Elektrische Maschine nach einem der vorhergehenden Ansprüche, wobei der zweite Leiter eine Bürste mit positiver Stromversorgung (5) ist, der mit dem beweglichen leitenden Teil elektrisch verbunden ist, und dadurch, dass der erste elektrische Leiter (71) mit Masse verbunden ist.

12. Anlasser für ein Kraftfahrzeug, welcher eine rotierende elektrische Maschine (1) nach einem der vorhergehenden Ansprüche umfasst.

13. System zum Schutz einer elektrischen Maschine vor einer Überhitzung, umfassend:
- die rotierende elektrische Maschine (1) nach einem der Ansprüche 1 bis 11,
- ein Stromversorgungsmittel, das eine erste Klemme und eine zweite Klemme umfasst, die mit der ersten bzw. zweiten Klemme der rotierenden elektrischen Maschine (1) verbunden sind,
- eine der elektrischen Maschine vorgeschaltete Schmelzsicherung (2), die zwischen der ersten Klemme des Stromversorgungsmittels und der ersten Stromklemme der rotierenden elektrischen Maschine (1) angebracht ist, um eine Stromklemme des Stromversorgungsmittels von der rotierenden elektrischen Maschine (1) zu trennen, wenn der durch die Schmelzsicherung (2) fließende Strom einen vorbestimmten Wert während einer vorbestimmten Zeit überschreitet.

## Claims

1. Rotary electric machine (1) comprising:
- a stator and a rotor,
- at least one first terminal and one second terminal forming the ground (9) of the machine (11) and an electric circuit connected to these two terminals, the electric circuit comprising an excitation coil in the rotor, positive brushes (5, 5'), negative brushes (6, 6'),
- the stator being formed by magnets of the electric machine or by windings of the electric circuit (4a-4d), the excitation coil being mounted in series with the windings (4a-4d),
- a thermal protection device (7) arranged in the electric machine comprising:
▪ a first electric conductor (71) electrically connected to the second terminal,
▪ a heat sensitive member (8) electrically disconnected from the electric circuit and arranged in the electric machine to be deformed above a predetermined temperature,
**characterized in that**, above the predetermined temperature, the deformation of the heat sensitive member (8) mechanically activates a connection means of the thermal protection device (7) so that it electrically connects the first electric conductor (71) to a second conductor of the electric circuit electrically connected directly upstream of the excitation coil, the second conductor having an electric potential different from the second terminal before activation of the connection means, and wherein the heat sensitive member (8) is arranged so as to enable, when deformed, one of the positive brushes (5, 5') to be electrically connected to the first electric conductor (71).

2. Rotary electric machine (1) according to any one of the preceding claims, wherein the connection means comprises a conductive part (72) movable between a blocked position and a short-circuit position,
and wherein the movable conductive part (72) is arranged so that, in the blocked position, it is electrically isolated from the first electric conductor (71) or from the second conductor of the electric circuit having a electric potential different from the second terminal, and, in the short-circuit position, it electrically connects the first terminal to the first conductor, and wherein the heat sensitive member (8) is arranged to keep the movable conductive part (72) in the blocked position and, when it is deformed, to release the movable conductive part (72) from the blocked position so that it is free to move from the blocked position to the short-circuit position.

3. Rotary electric machine (1) according to Claim 2, wherein the machine further comprises a displacement means to enable the movable conductive part (72) to move from the blocked position to the short-circuit position.

4. Electric machine according to any one of the preceding claims, comprising an electrically conductive brush holder with related brush (5), the heat sensitive member (8) enabling the first electric conductor (71) to be electrically connected to the brush holder via the connection means.

5. Electric machine according to Claim 2, wherein the movable conductive part (72) and the brush holder are arranged to cooperate by forming a sliding link between each other.

6. Electric machine according to Claim 2 and any one of Claims 3 to 5, wherein the machine comprises:
- a rotor shaft, comprising a field winding and a commutator (11),
- one of the positive brushes (5, 5') electrically connected to the first terminal, and
- a spring (75) between the positive brush (5) and the first electric conductor (71) to push the positive brush (5) towards the connector, also forming the displacement means of the movable conductive part (72),
and wherein the heat sensitive member (8) is moved at the predetermined temperature to enable the spring to move the movable conductive part (72) from an initial position to a final position in contact with the first conductor (71) .

7. Electric machine according to Claim 6, wherein the thermal protection device (7) further comprises an electric isolation member (74) mounted between the movable conductive part (72) and the spring (75).

8. Electric machine according to any one of Claims 4 to 7, wherein the cage of the positive brush (5) is electrically connected to the first terminal via the movable conductive part (72) in the blocked position.

9. Electric machine according to any one of the preceding claims, which is a continuous electric machine.

10. Electric machine according to any one of the preceding claims, comprising a second protection device (7').

11. Electric machine according to any one of the preceding claims, wherein the second conductor is a positive supply brush (5) electrically connected to the movable conductive part and in that the first electric conductor (71) is connected to ground.

12. Starter for a motor vehicle comprising a rotary electric machine (1) according to any one of the preceding claims.

13. System for protecting an electric machine against overheating, comprising:
- the rotary electric machine (1) according to any one of Claims 1 to 11,
- an electric supply means comprising a first terminal and a second terminal electrically connected respectively to the first and second terminals of the rotary electric machine (1),
- a fuse (2) upstream of the electric machine mounted between the first terminal of the electric supply means and the first electric terminal of the rotary electric machine (1) to disconnect an electric terminal of the electric supply means of the rotary electric machine (1) if the current passing through the fuse (2) exceeds a predetermined value for a predetermined time.
